**Europäisches Patentamt**

**European Patent Office**

**Office européen des brevets**

(19)

(11) Numéro de publication : **0 328 474 B1**

(12) **FASCICULE DE BREVET EUROPEEN**

(45) Date de publication du fascicule du brevet :
**08.04.92 Bulletin 92/15**

(51) Int. Cl.$^5$ : **C02F 3/30,** C02F 3/06,
C02F 3/10, A01K 63/04

(21) Numéro de dépôt : **89480022.6**

(22) Date de dépôt : **06.02.89**

(54) **Procédé de purification biologique des eaux contenant matières organiques et produits dérivés, utilisant la diffusion et l'action de micro-organismes aérobies et anaérobies et dispositif pour la mise en oeuvre.**

(30) Priorité : **08.02.88 FR 8801553**

(43) Date de publication de la demande :
**16.08.89 Bulletin 89/33**

(45) Mention de la délivrance du brevet :
**08.04.92 Bulletin 92/15**

(84) Etats contractants désignés :
**AT BE CH DE ES FR GB GR IT LI LU NL SE**

(56) Documents cités :
**EP-A- 0 201 924
DE-A- 2 001 366
DE-A- 3 434 678
FR-A- 2 079 100
FR-A- 2 490 623**

(73) Titulaire : **Jaubert, Jean
Parc Coromandel Emeraude B 18, avenue
Gravier
F-06100 Nice (FR)**

(72) Inventeur : **Jaubert, Jean
Parc Coromandel Emeraude B 18, avenue
Gravier
F-06100 Nice (FR)**

(74) Mandataire : **Hautier, Jean-Louis
Cabinet Hautier Office Méditerranéen de
Brevets d'Invention et de Marques 24 rue
Masséna
F-06000 Nice (FR)**

EP 0 328 474 B1

## Description

La présente invention concerne le traitement des eaux par voie biologique, et tout spécialement un procédé de purification biologique des eaux douces ou marines contenant des matières organiques solides (particules de tailles diverses) et dissoutes et des sustances minérales dissoutes provenant de la dégradation desdites matières organiques, au moyen de micro-organismes aérobies et anaérobies opérant en continu dans un même espace réactionnel.

Selon le procédé de l'invention, l'eau est traitée au moyen de micro-organismes aérobies qui dégradent les matières organiques, dont les composés azotés sont dégradés en deux étapes principales qui sont l'ammonisation (désamination et ammonification) et la nitrification (nitrosation et nitratation), et au moyen de micro-organismes anaérobies hétérotrophes qui réduisent les ions nitrate libérés par l'oxydation des composés azotés en utilisant comme source de carbone organique, une partie des composés carbonés présents dans le milieu réactionnel (dénitrification par voie hétérotrophique).

L'ammonisation et la nitrification biologiques sont des processus bien connus, employés industriellement pour minéraliser les composés organiques azotés présents dans les eaux usées domestiques et dans les eaux d'aquariums.

La dénitrification par voie hétérotrophique est également un processus bien connu qui commence à être appliqué industriellement à la potabilisation des eaux douces et à la purification des eaux d'aquarium. Elle nécessite la présence d'un substrat carboné.

Cependant, le procédé de l'invention ne se limite pas à l'oxydation des composés organiques azotés et à la réduction des nitrates présents dans l'eau à traiter. Il est aussi capable d'éliminer ou de neutraliser les composés organiques contenant du soufre et du phosphore, ainsi que de nombreux composés aromatiques, et notamment ceux qui proviennent de la dégradation des pigments végétaux. Cependant, la nature exacte des processus incriminés reste encore inconnue du demandeur.

Le procédé de l'invention est applicable avec le plus d'avantages aux eaux contenant des matières organiques d'origine naturelle. Ainsi, le procédé de l'invention trouve une application particulièrement intéressante dans la purification de l'eau des aquariums et des bassins dont il permet de conserver la pureté, la transparence, l'absence de coloration, et d'une façon plus générale, l'intégrité des propriétés biologiques et physicochimiques. La présente invention convient aux aquariums en circuit fermé et notamment aux aquariums domestiques de toutes dimensions, aux bassins et aquariums géants destinés au public et aux bassins utilisés en aquaculture.

On notera que les micro-organismes responsables de l'ammonisation (désamination et ammonification) et de la nitrification exigent un milieu riche en oxygène (milieu aérobie), tandis que les micro-organismes hétérotrophes dénitrifiants exigent un milieu pauvre en oxygène et un substrat organique carboné. On notera également que tous ces micro-organismes ne peuvent se développer et agir efficacement qu'à la surface d'un matériau qui leur sert de support. En conséquence, la purification par voie biologique des eaux contenant des matières organiques et produits dérivés exige pour s'accomplir :

– que les micro-organismes soient fixés sur un support,

– que les "polluants" (matières organiques et produits dérivés) contenus dans l'eau traitée entrent en contact avec les micro-organismes fixés à la surface de leur support (ces contacts devant avoir une fréquence aussi élevée que possible),

– que tout "polluant" dégradé (c'est-à-dire transformé en des produits différents) quitte rapidement la zone (site) où il à été transformé, et qu'il soit rapidement remplacé par un autre "polluant" arrivant au contact des micro-organismes pour être à son tour dégradé et ainsi de suite,

– que les micro-organismes responsables de l'ammonisation (désamination et ammonification) et de la nitrification soient placés dans un milieu riche en oxygène (milieu aérobie),

– que les micro-organismes hétérotrophes dénitrifiants soient placés dans un milieu pauvre en oxygène et qu'ils disposent d'un substrat organique carboné.

Ainsi, les divers procédés connus diffèrent-ils par les moyens mis en oeuvre pour remplir les conditions précédemment énumérées. L'état de la technique peut être défini par les brevets ci-après décrits dans leurs caractéristiques essentielles.

Une grande variété de matériaux inorganiques de structure, texture, porosité, composition chimique etc...différentes est utilisée comme support de micro-organismes. Il s'agit par exemple d'argile, de sables, de graviers, d'argile expansée, de charbon macro ou micro-poreux etc... A quelques exception près (par exemple verre fritté, brevet européen n°0155.669), ces supports ne sont pas couverts par des brevets. C'est notamment le cas des matériaux carbonatés d'origine naturelle, tel que les sables d'origine organique, le maërl, les coraux et coquilles broyés etc... qui sont employés dans plusieurs procédés (par exemple brevet européen n°0133.405 et brevet français FR.A.2.490.623, en raison de leur capacité à neutraliser les produits acides libérés par les

2

réactions bactériennes, et à réguler le pH de l'eau (effet tampon).

Tous les procédés connus utilisent le même moyen pour transporter les polluants jusqu'au contact des micro-organismes fixés sur leur support et pour évacuer les produits issus de leur dégradation : l'eau circule au contact du matériau qui sert de support aux micro-organismes. Dans certains cas, l'eau à traiter traverse le support qui constitue alors une masse filtrante (filtration par percolation) : par exemple procédé NITREX, marque déposée et brevets EP 0096.170, EP 0133.405, DE.A.3.434.678, EP A 0201.924, FR.A.2.079.100, FR.A.2.490.623, DE.A.2.001.366 et). Dans d'autres cas, le matériau qui sert de support aux micro-organismes est mis en suspension (boue activée ; par exemple brevets EP 0008.471 et EP 0070.592) ou encore agité ou malaxé dans l'eau traitée (réacteurs à agitation ou à lits fluidisés ; par exemple brevet EP 0046.901). Le principal inconvénient des filtres percolateurs est leur colmatage inéluctable qui nécessite des opérations périodiques de nettoyage ou de remplacement total ou partiel de la masse filtrante. Le principal inconvénient des procédés utilisant des boues activées est qu'il est nécessaire, en fin de processus, de séparer l'eau purifiée et la boue activée. Il est important de noter que dans tous ces procédés, l'eau circule au contact du matériau qui sert de support aux micro-organismes.

Divers moyens sont employés pour créer et maintenir les conditions aérobies indispensables aux micro-organismes responsables de l'ammonisation et de la nitrification. Dans certains cas (boue activées), des bulles d'oxygène ou d'un gaz riche en oxygène insufflé à la base du réacteur servent à la fois a oxygéner l'eau traitée et à créer un courant ayant pour effet de maintenir la boue en suspension (par exemple EP 0070.592 et EP 0008.471). Lorsqu'il s'agit de réacteurs à percolation, l'eau préalablement oxygénée peut traverser suffisamment rapidement la masse filtrante pour que sa concentration en oxygène demeure suffisamment élevée tout au long de son trajet (c'est le cas de la plupart des filtres d'aquarium) ; cependant, il est parfois nécessaire d'insuffler de l'oxygène ou un gaz riche en oxygène, par exemple à la base du réacteur, de telle sorte que les bulles remontent en traversant la masse filtrante, à contre-courant de l'eau qui traverse par gravité cette même masse filtrante (par exemple brevets FR.A.2.490.623, et FR.A.2.079.100). Enfin dans certains filtres percolateurs fonctionnant par ruissellement (par exemple étage de nitrification du procédé Minireef, marque déposée), la masse filtrante n'est pas complètement imprégnée d'eau. Dans ce dernier cas, la concentration en $O_2$ de l'eau qui ruisselle est maintenue à une valeur élevée par simple contact avec l'air qui circule librement, dans les interstices de la masse filtrante. Il est important de noter que dans tous ces procédés les conditions aérobies sont créées et entretenues par insufflation d'oxygène ou d'un gaz riche en oxygène dans l'eau à traiter, avant et (ou) pendant le traitement, ou encore par circulation libre de l'air dans les interstices de la masse filtrante. En aucun cas, l'oxygène n'est produit à l'intérieur même du matériau qui sert de support aux micro-organismes.

Dans les procédés faisant intervenir une masse filtrante, les conditions d'anaérobiose sont créées et entretenues en isolant la masse filtrante de l'air ambiant, en réduisant le débit d'eau et en allongeant le parcours de l'eau à l'intérieur de la masse filtrante (par exemple brevets EP 0096.170, EP 0133.405 et EP 0154.105).

Les processus aérobies (ammonisation et nitrification) exigent un milieu riche en oxygène, alors que, au contraire, le processus de dénitrification exige un milieu pauvre en oxygène. Ces exigences contraires font qu'il est difficile d'associer et de faire travailler en continu, dans un même espace réactionnel, les différents micro-organismes qui sont responsables de ces processus. Ainsi la plupart des procédés connus ne réalisent simultanément, en un même lieu, que l'une ou l'autre des deux catégories de processus ci-dessus énumérées, de telle sorte qu'il est en général nécessaire d'associer plusieurs dispositifs servant à mettre en oeuvre des procédés complémentaires en vue d'obtenir successivement la minéralisation des matières organiques par voie aérobie puis la transformation, par voie anaérobie, des substances qui résultent de cette minéralisation. Cependant, certains procédés parviennent à faire cohabiter et agir simultanément dans un réacteur non cloisonné de micro-organismes aérobies et de micro-organismes anaérobies.

Selon le brevet européen n° EP 0008.471, ce résultat est obtenu à l'intérieur d'un réacteur contenant de l'eau mélangée à une boue activée en suspension, en règlant l'agitation et l'apport d'oxygène, de façon à créer, dans le même espace réactionnel, des zones aérobies et des zones anaérobies, qui sont successivement traversées par l'eau à traiter. Les principaux inconvénients de ce procédé résident dans le fait que les contraintes imposées pour créer et maintenir les conditions indispensables au fonctionnement du procédé sont sévères et qu'il est nécessaire, en fin de processus, de séparer l'eau purifiée et la boue activée. Il est important de noter que l'eau à traiter traverse successivement les zones aérobies et anaérobies, et que la substance qui sert de support aux différents micro-organismes utilisés est une boue activée maintenue en suspension dans l'eau à traiter.

Un autre procédé connu consiste à faire passer lentement l'eau à traiter à travers une masse filtrante, constituée par une matière poreuse ou fibreuse complètement imprégnée d'eau et isolée de l'air ambiant, contenant des micro-organismes aérobies et des micro-organismes anaérobies. Dans ce cas, la dégradation des matières organiques azotées par ammonisation et nitrification est accomplie dans la couche superficielle de la masse filtrante, par les micro-organismes aérobies qui consomment l'oxygène contenu dans l'eau. Ainsi, au cours de son cheminement, l'eau perd progressivement l'oxygène qu'elle contient, jusqu'au moment où la concentration de ce gaz est suffisamment faible pour permettre l'accomplissement du processus de dénitrification biologique. Ce procédé présente deux inconvénients majeurs. En premier lieu, la vitesse d'écoulement de l'eau doit être contrôlée, pour éviter que le processus de dénitrification soit pertubé par un éxcès ou un manque d'oxygène résultant respectivement d'un écoulement trop lent ou trop rapide de l'eau à travers la masse filtrante. Lorsqu'il y a trop d'oxygène dans la zone de dénitrification, la dénitrification est incomplète et il y a libération de nitrites. En deuxième lieu, l'eau qui parvient dans la zone où s'effectue la dénitrification ne contient plus de substances organiques carbonées. En effet, ces substances carbonées sont minéralisées dans la couche riche en oxygène que l'eau doit traverser avant d'arriver au contact des bactéries dénitrifiantes. De ce fait, la dénitrification qui s'opère est une dénitrification autotrophique, dont le rendement est faible.

Pour palier ce dernier inconvénient, des procédés connus utilisent une substance organique carbonnée, qui est incorporée à l'eau à traiter, et dont le dosage doit être rigoureusement contrôlé (par exemple système Minireef, marque déposée). D'autres procédés connus utilisent comme masse filtrante, des matériaux poreux auxquels un substrat organique carboné a été incorporé (par exemple procédé NITREX marque déposée brevet EP 0133.405, EP 0102.584 et DE.A.3.434.678), mais il est alors indispensable de remplacer ce matériau poreux dès que le substrat carboné qu'il contient est épuisé.

Par ailleurs, l'emploi d'une masse filtrante présente un inconvénient supplémentaire qui concerne plus particulièrement les aquariums marins. Cet inconvénient réside dans le fait que la filtration mécanique, consécutive au passage de l'eau à travers la masse filtrante, contrarie ou empêche le développement de nombreux organismes filtreurs, en éliminant en partie ou en totalité les animalcules planctoniques et les particules organiques en suspension qui constituent leur principale source de nourriture.

Enfin, on notera que selon le brevet américain US 4.333. 263, la purification par voie biologique des eaux contenant des matières organiques et produits dérivés est réalisée sans qu'il soit fait appel à des micro-organismes. Les nitrates ainsi que d'autres substances minérales dissoutes sont absorbés par des algues cultivées sur des cadres grillagés contenus dans une cuve dans laquelle circule l'eau à traiter. Ces cadres sont retirés fréquemment et raclés pour éliminer les parties molles des algues et, par voie de conséquence, les nitrates et autres substances minérales qu'elles ont absorbé et fixé. Ce procédé dénommé "algal scrubber" présente l'inconvénient d'exiger des interventions fréquentes pour racler et éliminer une partie des algues cultivées. Il est important de noter qu'il n'utilise pas de micro-organismes aérobies ou anaérobies.

DE.A.3.434.678. (H. HOFFMAN) ; comme le montre de manière évidente les figures, il s'agit d'un dispositif du type percolateur où le volume d'eau à traiter traverse la masse filtrante. Les flèches représentées sur les figures sont significatives. Par sécurité, un by-pass peut shunter le filtre vers la chambre 5. Il n'y a pas de volume d'eau confiné, pas de traitement de l'eau par diffusion.

EP A-0-201.924 : ce brevet décrit un dispositif où l'eau traverse une masse filtrante par percolation. Il y a donc circulation de l'eau. Une installation de clarification pour l'épuration d'eaux résiduaires organiques comprend un réservoir avec une canalisation d'arrivée, une canalisation d'écoulement et une canalisation d'extraction pour les boues excédentaires. Dans le réservoir, qui est réalisé avec une surface extérieure aussi réduite que possible, par unité de volume, est disposé un ensemble immergé subdivisé en zones constitué par un certain nombre de corps individuels posés les uns sur les autres. Dans la zone du fond du réservoir, en forme d'entonnoir, est disposé un système de gazéification. Le contenu du réservoir est mis en circulation en sens inverse des bulles de gaz ascendantes diffusées par le système de gazéification, à travers une conduite au moyen d'une pompe incorporée. Une sonde de mesure mobile, mobile à l'intérieur d'un tube de sondage, permet de contrôler les processus qui se déroulent dans les différentes zones de l'ensemble immergé. Avec une coordination adéquate du débit de gaz, de la vitesse d'écoulement de l'eau résiduaire et de la résistance opposée à l'écoulement par le corps immergé, on peut ajuster dans les zones individuelles du corps immergé des conditions différenciées, par exemple aérobies, "falcutatives" et/ou anaérobies.

Le fait que les conditions différenciées soient facultatives démontre qu'il n'y a pas diffusion mais percolation.

FR.A.2.079.100 : ce brevet décrit un procédé pour l'élimination de matières organiques polluantes contenues dans l'eau, caractérisé par le fait que l'on fait passer l'eau à épurer à travers un lit filtrant constitué d'un garnissage en un matériau poreux ayant une surface active spécifique comprise entre 10 et 400 mètres carrés par gramme, ledit lit filtrant contenant une population bactérienne aérobie, sous l'action de laquelle se développent, en conditions aérobies au sein du lit filtrant, des phénomènes de dégradation des matières organiques polluantes, avec l'introduction dans l'eau en cours d'épuration pendant sa filtration d'une quantité d'oxygène suffisante pour maintenir la population bactérienne à l'état aérobie, en fonction de la teneur en matières polluantes et de la quantité d'eau à épurer.

FR.A.2.490.623 : ce brevet décrit un procédé de traitement de l'eau dans les systèmes d'aquaculture en circuit fermé, caractérisé en ce qu'il consiste à faire passer l'eau à travers une couche filtrante de matériau solide dans laquelle est injecté un gaz contenant de l'oxygène, de façon à réaliser en une seule étape, une élimination de la pollution azotée, une oxygénation compensant la consommation d'oxygène et, si nécessaire, une élimination des déchets solides par filtration, les débits respectifs de gaz contenant de l'oxygène et d'eau à traiter à travers la couche de matériau solide étant tels que le pH de l'eau est maintenu entre 5 et 9.

DE.A.2.001.366 : filtre à base d'algues et de plantes pour la filtration des substances en suspension dans des solutions aqueuses. La couche supérieure du lit filtrant est constituée par des algues fibreuses, qui sont maintenues lâches entre deux plaques tamis. La couche inférieure, la couche benthique, est engendrée à partir des substances en suspension qui ont été interceptées.

DE.A.3.434.678 : procédé et dispositif pour l'élimination de l'albumine et de ses produits de dégradation dans l'eau. Dans un procédé pour l'élimination de l'albumine et de ses produits de dégradation, dans les eaux résiduaires, on arrose avec l'eau à épurer un matériau filtrant présentant une grande surface de contact. Pour pouvoir éliminer aussi, en particulier, le nitrate présent dans l'eau, on utilise comme matériau filtrant une matière support inerte, telle qu'un matériau à base de matière synthétique, de préférence une matière plastique alvéolaire ou mousse, du "Blähton" ou quelque autre produit analogue, qui contient des produits de nourritures bactériophiles tels que des lactoses et/ou des dextroses et/ou de l'esther phtalique ou des produits équivalents, et qui libère ces produits lentement, pendant une période de temps de longue durée, de sorte que la matière support constitue un substrat favorable pour l'établissement de colonies de bactéries. Dans le matériau filtrant, on ajuste une zone de réaction aérobie et une zone de réaction anaérobie, de sorte qu'à l'intérieur du matériau filtrant on peut obtenir le déroulement d'un processus de nitrification ainsi que celui d'un processus de dénitrification.

Tous ces brevets décrivent des dispositifs de filtration par percolation (l'eau traverse une masse filtrante) et non par DIFFUSION.

La présente invention a pour but de remédier à tous ces inconvénients en créant le premier procédé biologique, capable de réaliser simultanément et en continu, dans un même espace réactionnel, toutes les fonctions qui permettent de purifier totalement une eau contenant des matières organiques solides (particules de tailles diverses) et dissoutes et des substances minérales dissoutes provenant de la dégradation desdites matières organiques, et pouvant être mis en oeuvre à l'aide d'un dispositif simple et capable de fonctionner sans démontage. Dans la suite du texte, les matières organiques solides sont désignées par les termes "particules organiques" et les substances minérales provenant de la dégradation desdites matières organiques sont appelées "polluants dissous".

Les caractéristiques techniques du procédé de l'invention sont les suivantes :

Le procédé de purification biologique des eaux douces ou marines contenant des matières organiques solides et dissoutes et des substances minérales dissoutes provenant de la dégradation desdites matières organiques, et notamment des eaux d'aquariums et de bassins d'aquaculture, utilisant l'action de micro-organismes aérobies et anaérobies ayant la propriété de dégrader les matières organiques et de neutraliser les polluants dissous, l'eau est traitée à l'intérieur d'un ou plusieurs moyens faisant office de réacteurs, et caractérisé par le fait qu'il utilise un ou plusieurs réacteurs (cuves) à l'intérieur desquels l'eau est traitée par DIFFUSION et action de micro-organismes aérobies et de micro-organismes anaérobies. Chaque réacteur comporte, à l'intérieur, un espace principal de réaction constitué par une substance poreuse ou fibreuse, servant de support aux différents micro-organismes utilisés, qui forme une cloison épaisse, interposée entre le volume d'eau à traiter et un ou plusieurs volumes d'eau confinée, ledit espace principal de réaction présente des moyens pour maintenir des gradients de concentration des diverses substances dissoutes aptes à créer et maintenir ladite diffusion.

a) Le principal espace de réaction est configuré de telle sorte qu'il présente deux interfaces, respectivement en contact avec l'eau à traiter, riche en oxygène, et avec un volume d'eau confinée, pauvre en oxygène.

b) Le principal espace de réaction comporte, dans son épaisseur, plusieurs zones de réaction contiguës, une zone de réaction riche en oxygène adjacente à l'interface en contact avec l'eau à traiter, une zone de réaction pauvre en oxygène adjacente à l'interface en contact avec l'eau confinée et une zone intermédiaire.

c) La zone de réaction riche en oxygène adjacente à l'interface en contact avec l'eau à traiter contient des micro-organismes aérobies ayant la propriété de dégrader les matières organiques et notamment des micro-organismes aérobies ayant la propriété de minéraliser complètement les composés azotés (transformation en nitrates).

d) La zone de réaction pauvre en oxygène adjacente à l'interface en contact avec l'eau confinée contient des micro-organismes anaérobies ayant la propriété de neutraliser (transformer en produits inoffensifs) les polluants dissous, et notamment des micro-organismes anaérobies hétérotrophes, ayant la propriété de réduire complètement les nitrates (réduction des nitrates en nitrites, puis des nitrites en azote moléculaire) et les nitrites présents dans l'eau à traiter.

e) La zone intermédiaire contient un mélange de micro-organismes aérobies et de micro-organismes anaérobies.

f) Le volume d'eau confinée est plongé dans l'obscurité.

La substance poreuse ou fibreuse servant de support aux micro-organismes aérobies et aux micro-organismes anaérobies est de préférence un matériau carbonaté possédant un pouvoir tampon et ayant un effet correcteur sur le pH de l'eau.

La substance est formée à partir de coraux broyés.

La substance poreuse ou fibreuse contient des micro-algues fixées dans la mince couche superficielle adjacente à l'interface en contact avec l'eau à traiter ; cette interface est fortement éclairée.

On introduit de petits organismes fouisseurs détritivores dans l'épaisseur de la substance poreuse ou fibreuse .

Pour un fonctionnement optimum du procédé de l'invention, il est impératif que, dans le volume d'eau confinée et pauvre en oxygène, la concentration de ce gaz soit maintenue aux environs d'un milligramme par litre d'eau, par un moyen de régulation.

Le principal espace de réaction est utilisé pour créer des gradients de concentration qui structurent l'espace intérieur de chaque réacteur (gradients d'oxygène, d'azote, de gaz carbonique, d'ions ammonium, de nitrites, de nitrates, de calcium et autres substances dissoutes).

Ce procédé utilise une partie des matières organiques présentes dans l'eau à traiter comme substrat carboné indispensable aux micro-organismes dénitrifiants hétérotrophes.

Ce procédé utilise des moyens pour empêcher la lumière d'atteindre le volume d'eau confinée et d'éclairer l'interface de la substance poreuse ou fibreuse en contact avec ledit volume d'eau confinée et pour empêcher tout dégagement d'oxygène par photosynthèse.

Le dispositif pour la mise en oeuvre du procédé est composé :

– d'un ou plusieurs réacteurs (cuves) à l'intérieur desquels l'eau est traitée par DIFFUSION et action de micro-organismes aérobies et de micro-organismes anaérobies,

– chaque réacteur comporte, à l'intérieur, un espace principal de réaction constitué par une substance poreuse ou fibreuse, servant de support aux différents micro-organismes utilisés, qui forme une cloison épaisse, interposée entre le volume d'eau à traiter et un ou plusieurs volumes d'eau confinée.

La cloison présente, dans son épaisseur, plusieurs zones de réaction : une zone sursaturée en oxygène, occupée par des micro-algues et des micro-organismes aérobies ; une zone riche en oxygène, occupée par des micro-organismes aérobies ; une zone pauvre en oxygène occupée par des micro-organismes anaérobies ; une zone intermédiaire, dans laquelle on trouve des micro-organismes aérobies et des micro-organismes anaérobies.

L'intérieur de chaque réacteur comporte une ou plusieurs cloisons épaisses, attachées par leurs extrémités aux parois du réacteur.

Le dispositif a la (ou les) cloison épaisse horizontale.

Le dispositif a la (ou les) cloison épaisse verticale.

Le dispositif a la (ou les) cloison épaisse inclinée

L'intérieur de chaque réacteur comporte une ou plusieurs cloisons épaisses qui ne sont pas attachées aux parois du réacteur et forment un ou plusieurs volumes creux contenant l'eau confinée.

La substance poreuse ou fibreuse formant la cloison et servant de support aux différents micro-organismes utilisés est, de préférence, un matériau carbonaté possédant un pouvoir tampon et ayant un effet correcteur sur le pH de l'eau.

La cloison est constituée par du sable ou du gravier pris en sandwich entre deux grilles.

Le ou les volumes d'eau confinés peuvent comporter un moyen de régulation de la concentration en oxygène dissous qui doit être de 1mg/l.

Le moyen de régulation de la concentration d'oxygène dissous qui doit être compris entre 0,5 et 1mg/l peut être un flux d'eau qui transite en petite quantité dans le ou lesdits volumes d'eau confinée, ledit flux pouvant provenir par un conduit du volume d'eau à traiter et revenir par un autre conduit vers ce même volume d'eau à traiter.

Selon un autre mode de réalisation, la régulation est obtenue en réglant l'épaisseur et la densité de la couche de substance poreuse ou fibreuse comprise entre l'interface qui est en contact avec l'eau à traiter et l'interface qui est en contact avec le volume d'eau confinée.

Pour un fonctionnement correct du procédé de l'invention, il est impératif que, dans le volume d'eau confinée et pauvre en oxygène, la concentration de ce gaz soit maintenue aux environs d'un milligramme par litre d'eau ; en effet, au-dessus de 1,5 milligramme par litre, la dénitrification est incomplète, et il y a production de nitrites qui sont des substances particulièrement toxiques ; au-dessus de 0,5 milligramme par litre d'eau, il y a généralement production d'hydrogène sulfuré, qui est un gaz toxique pour la plupart des organismes aquatiques ; ce résultat est obtenu en réglant l'épaisseur et la densité de la couche de substance poreuse ou fibreuse comprise entre l'interface qui est en contact avec l'eau à traiter et l'interface qui est en contact avec le volume d'eau confinée ou en injectant un flux d'eau qui transite en petite quantité dans le ou lesdits volumes d'eau confinée, ledit flux pouvant provenir par un conduit du volume d'eau à traiter et revenir par un autre conduit vers ce même volume d'eau à traiter.

Les réacteurs (cuves) sont associés en cascade pour constituer une installation dans laquelle l'eau pénètre au niveau de la première cuve et ressort au niveau de la dernière cuve ; lorsqu'une telle installation est utilisée en circuit ouvert, il est nécessaire d'ajuster le débit de l'installation de pompage, et par voie de conséquence le temps de résidence de l'eau, de façon à obtenir de l'eau pure à la sortie du dernier réacteur ; lorsque l'installation est reliée, en circuit fermé, à un bassin contenant l'eau à traiter, le débit de l'installation de pompage peut varier dans d'importantes proportions sans affecter notablement le fonctionnement de l'installation.

Dans un mode de mise en oeuvre particulier du procédé de l'invention, le réacteur est un aquarium, à l'intérieur duquel la cloison est constituée par du sable ou du gravier, qui est pris en sandwich entre deux grilles ; l'une des grilles, située à faible distance du fond de l'aquarium supporte la couche de sable ; l'autre grille, qui se trouve au-dessus de la première et qui, pour des raisons esthétiques, est dissimulée sous une mince couche de sable ou de gravier, sert à empêcher les habitants de l'aquarium, et en particulier certains poissons, de creuser et de déblayer une partie du sable, ce qui aurait pour conséquence néfaste de perturber le fonctionnement du procédé en détruisant la stratification de la couche de sable formant la cloison et en interrompant le confinement de l'eau occupant l'espace situé sous la cloison ; c'est l'aquarium lui-même qui fait office de réacteur et l'eau qu'il contient est totalement purifiée, sans qu'il soit nécessaire d'utiliser d'autres accessoires que ceux qui sont nécessaires à la mise en oeuvre du procédé de l'invention.

Les réactions bactériennes, et tout particulièrement les réactions de dénitrification, libèrent des produits acides qui tendent à acidifier le milieu et à diminuer le rendement du procédé. Pour éviter cet inconvénient, la matière poreuse ou fibreuse servant de support aux bactéries sera de préférence une substance carbonatée, capable de tamponner le milieu. On utilisera avantageusement à cet effet un sable calcaire grossier tel que du maerl (sable constitué de débris d'algues calcaires et d'éléments de squelette de divers invertébrés marins), ou des coraux broyés, qui sont des matériaux qui, outre leur pouvoir tampon, offrent de nombreux sites de fixation aux différents micro-organismes utilisés et notamment à ceux qui sont responsables de l'ammonisation de la nitrification et de la dénitrification, en raison de la grande porosité de leurs constituants. Dans ce cas particulier, le cloisonnement du réacteur est réalisé en déposant le maerl ou les coraux broyés sur une grille, ou encore en remplissant l'espace ménagé entre deux grilles. D'excellents résultats ont été obtenus avec un sable grossier d'origine naturelle, constitué essentiellement de tests de foraminifères benthiques, et composé de grains ayant un diamètre moyen variant entre 2 et 3 mm. Consécutivement à la neutralisation des produits acides, les substrats carbonatés tels que le maerl et les coraux broyés se dissolvent lentement en libérant des ions calcium qui tendant à alcaliniser le milieu. En conséquence on évitera d'utiliser des substrats carbonatés ou on réduira les quantités utilisées, par mélange avec un produit neutre, lorsque le procédé sera mis en oeuvre pour purifier certains aquariums d'eau douce dans lesquels on cherche à maintenir un pH acide. En revanche, la libération d'ions calcium est très avantageuse dans le cas des aquariums marins, dans la mesure où ce phénomène permet de maintenir l'équilibre du système $CO_2$, et par voie de conséquence, de conserver le pouvoir tampon et l'alcalinité du pH de l'eau de mer. Ces propriétés de l'eau de mer sont conservées, même lorsque l'aquarium contient de nombreux organismes capables de fixer de grandes quantités de carbonates de calcium, tels que des algues calcaires, des Scléractiniaires, des mollusques, des vers tubicoles etc. En outre, dans ces conditions, les organismes en question peuvent, sans aucune limitation, puiser dans l'eau qui les entoure, le calcium nécessaire à l'élaboration de leur squelette. Dans les cas extrêmes, le processus de dissolution est suffisamment rapide pour rendre nécessaires des apports périodiques de substrat carbonaté.

Les particules organiques en suspension dans l'eau à traiter sont dégradées par les bactéries qui se développent à leur propre surface, tandis que celles qui viennent au contact de la substance poreuse ou fibreuse qui sert de support aux différents micro-organismes utilisés, sont dégradées et transformées en substances dissoutes par les micro-organismes aérobies qui se trouvent dans la couche riche en oxygène. Une grande originalité du procédé de l'invention réside dans le fait que l'eau à traiter ne traverse pas le principal espace de réaction constitué par la matière poreuse ou fibreuse utilisée. Les échanges de substances dissoutes qui ont lieu entre l'eau à traiter, l'eau confinée, et les différentes zones de réaction situées dans le principal espace de réaction, se font par diffusion, notamment au travers des interfaces qui servent de frontières entre ces différents éléments. Les micro-organismes responsables de l'ammonisation et de la nitrification occupant la zone de réaction riche en oxygène, adjacente à l'interface en contact avec l'eau à traiter, transforment les composés azotés en nitrates et en nitrates qui diffusent en direction de la zone pauvre en oxygène où ils sont réduits par les micro-organismes dénitrifiants hétérotrophes qui s'y trouvent. Il semble qu'une partie importante des nitrites ainsi formés soit réduite avant d'avoir été transformée en nitrates. Ces bactéries hétérotrophes utilisent, comme source de carbone organique, une partie des composés carbonés présents dans le milieu réactionnel, et provenant de l'eau à traiter. L'azote moléculaire, libéré par la réduction des ions nitrates, diffuse en direction de la couche riche en oxygène. Il passe ensuite dans l'eau à traiter et finit par gagner l'atmosphère. De même, les ions calcium libérés dans le principal espace de réaction par la neutralisation des composés acides produits par les différents micro-organismes utilisés et notamment par les micro-organismes anaérobies hétérotrophes, diffusent en direction de l'eau à traiter. Ce sont des flux d'oxygène, de nitrates, d'azote etc., qui traversent les différentes interfaces, en fonction des gradients de concentration qui structurent l'espace où s'opèrent les réactions. Il n'y a de ce fait aucun risque de colmatage. Un autre avantage, résultant du fait que les échanges de substances se font par diffusion, apparait lorsque la purification de l'eau est réalisée dans un circuit fermé, comprenant le réacteur et un récipient contenant l'eau à traiter. Dans ce cas, en effet, le temps de résidence de l'eau, à l'intérieur du réacteur est pratiquement sans influence sur le fonctionnement du procédé, ce qui implique qu'il est inutile de réguler le débit de l'installation de pompage.

Dans une variante du procédé de l'invention, la partie la plus superficielle de la couche qui est contact avec l'eau à traiter est fortement éclairée et sert de support à des micro-algues, qui sont ainsi associées aux bactéries aérobies. Sous l'effet de la lumière, les microalgues produisent de l'oxygène qui sature la couche dans laquelle elles se trouvent.

L'abondance d'oxygène accélère la dégradation des matières organiques par les micro-organismes aérobies et facilite notamment le travail des bactéries ammonisantes et nitrifiantes, ce qui a pour effet d'éviter l'accumulation des produits intermédiaires toxiques que sont les ions ammonium (et surtout la fraction non dissociée NH3, très toxique) et les ions nitrites. Ceci est particulièrement important dans le cas des aquariums marins contenant des organismes tropicaux, où le pH basique et la température élevée font que le pourcentage non dissocié (NH3) est très fort. Cette variante qui a pour effet d'augmenter le rendement du procédé, sans en changer les principes fondamentaux, ne sort pas du cadre de l'invention.

Dans une autre variante du procédé de l'invention, la matière poreuse ou fibreuse servant de support aux microalgues et aux bactéries, contient des petits organismes détritivores fouisseurs tels que ceux qui vivent naturellement dans les sédiments aquatiques. Ces petits organismes participent à l'élimination des déchets organiques en se nourrissant de ceux qui arrivent au contact de la cloison. En outre, ils disséminent des particules organiques dans l'épaisseur de la matière poreuse ou fibreuse, par leurs déjections et par leur action mécanique de bioturbation, ce qui a pour résultat de faciliter la dégradation des particules organiques qui sont incorporées à la couche riche en oxygène, et de faciliter l'apport de substrat carboné au contact des micro-organismes dénitrifiants hétérotrophes qui se trouvent dans la zone pauvre en oxygène. Comme la précédente, cette variante qui a pour effet d'augmenter le rendement du procédé, sans en changer les principes fondamentaux, ne sort pas du cadre de l'invention. On notera simplement que l'activité bioturbatrice de ces petits organismes doit être suffisamment modérée pour ne pas amener trop d'oxygène ou de particules organiques, dans la couche pauvre en oxygène qui abrite les micro-organismes dénitrifiants. Dans le cas contraire, le fonctionnement du procédé serait gravement perturbé avec comme principale conséquence une baisse importante du rendement des réactions de dénitrification et une accumulation possible de substance toxiques sous la forme d'ions nitrites. Ce risque est facilement évité on choisissant des organismes de très petite taille, opération qui est à la portée de l'homme de métier et ne sort pas du cadre de la présente invention.

Selon une caractéristique essentielle du procédé de l'invention, les différents organismes, micro-organismes et micro-algues utilisés par le procédé de l'invention sont introduits dans l'espace réactionnel, à partir de souches sélectionnées pour leur efficacité et cultivées dans ce but. Il est cependant possible d'utiliser comme ensemble réactionnel, un sédiment aquatique, directement prélevé dans le milieu naturel, et contenant toute sa faune, sa micro-faune et sa micro-flore. On notera toutefois que le degré de purification de l'eau et la fiabilité du procédé de l'invention dépendent autant des propriétés respectives des constituants vivants et non vivants de l'ensemble réactionnel, que du respect des conditions de mise en oeuvre qui ont été précédemment définies et décrites.

Le procédé présente donc des avantages tout à fait décisifs, auxquels s'ajoute la simplicité de sa mise en oeuvre.

L'invention sera encore illustrée sans être aucunement limitée par la description ci-après, faite en référence aux dessins annexés sur lesquels :

– la figure 1 représente une coupe illustrant de façon schématique une installation pour la mise en oeuvre du procédé de l'invention dans un réacteur (cuve) traversée par l'eau à traiter, et ne présentant qu'une seule cloison horizontale ;
– la figure 2 représente une coupe illustrant de façon schématique une installation pour la mise en oeuvre du procédé de l'invention à l'intérieur d'un aquarium, et selon laquelle, c'est l'aquarium lui-même qui est utilisé comme réacteur ;

EP 0 328 474 B1

– la figure 3 est une coupe schématique analogue à la figure 1, illustrant une variante de l'installation représentée par la figure 1, selon laquelle plusieurs réacteurs (cuves) sont associés en cascade ;
– la figure 4 représente une coupe illustrant de façon schématique une installation pour la mise en oeuvre du procédé de l'invention dans un réacteur (cuve), traversé par l'eau à traiter, et présentant plusieurs cloisons verticales.

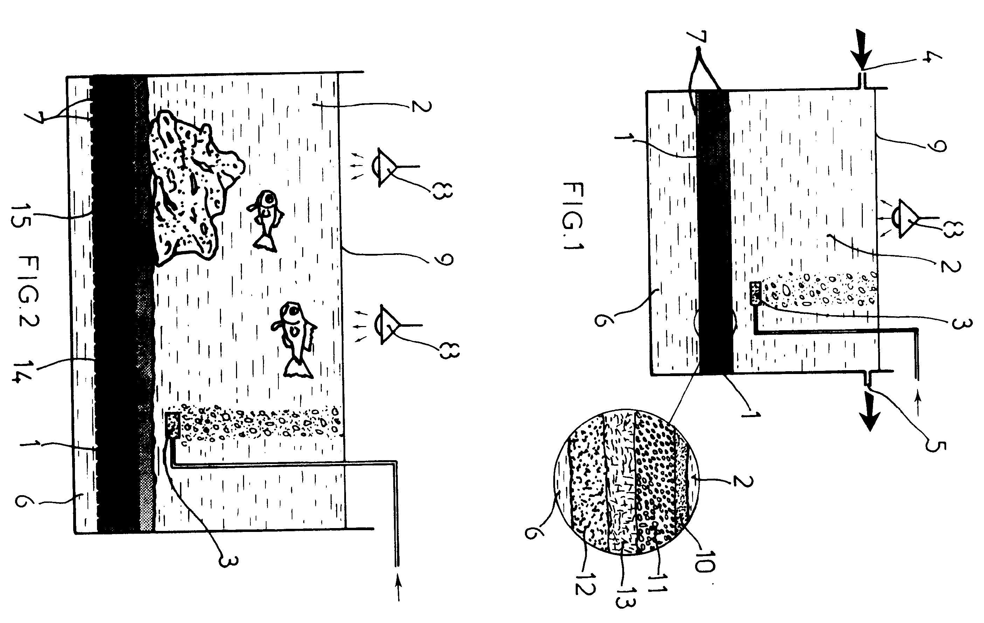

La figure 1 représente schématiquement une installation pour la mise en oeuvre du procédé de l'invention constituée par un réacteur (cuve), présentant une cloison horizontale 1, constituée par la substance poreuse ou fibreuse qui sert de support aux différents composants biologiques actifs utilisés par le procédé de l'invention.

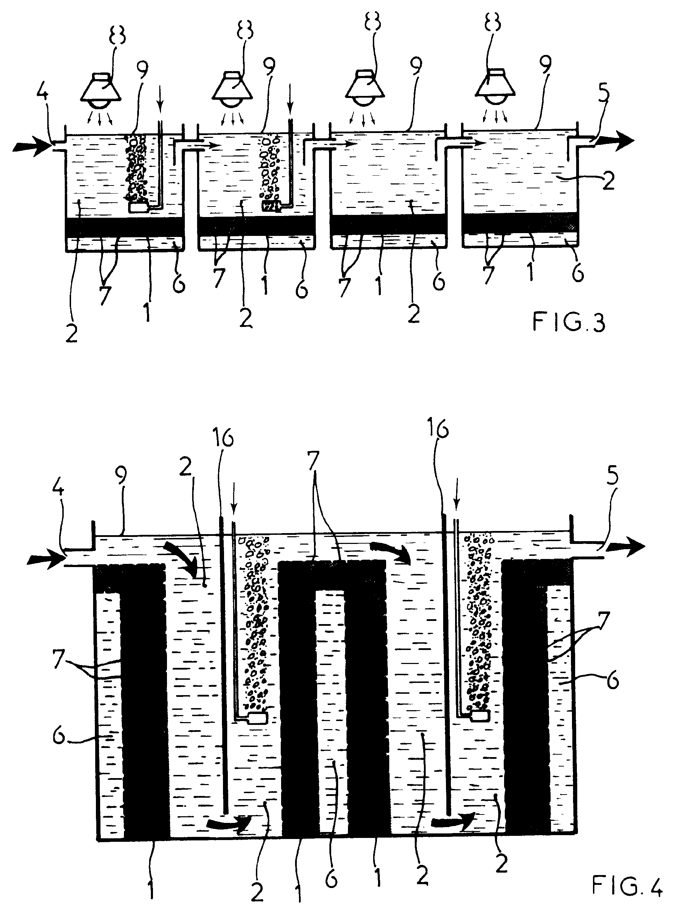

L'eau à traiter, dont le niveau est schematiquement représenté par une ligne horizontale 9, circule à l'intérieur du réacteur, dans l'espace 2 situé au-dessus de la cloison 1. Elle est aérée et brassée par injection d'air à travers un diffuseur 3. Elle pénètre dans de réacteur par l'orifice 4 et en ressort par l'orifice 5. Le volume d'eau confinée, pauvre en oxygène occupe, à la partie inférieure du réacteur, l'espace 6 situé au-dessous de la cloison 1. L'interface (paroi) 7 de la cloison qui est en contact avec l'eau à traiter est fortement éclairée au moyen d'une lampe ou de soleil 8. La cloison 1 présente, dans son épaisseur, plusieurs zones de réaction : une zone sursaturée en oxygène 10 occupée par des micro-algues et des micro-organismes aérobies ; une zone riche en oxygène 11 occupée par des micro-organismes aérobies ; une zone pauvre en oxygène 12 occupée par des micro-organismes anaérobies ; une zone intermédiaire 13 dans laquelle on trouve des micro-organismes aérobies et des micro-organismes anaérobies. Une installation de ce type convient au traitement, en circuit fermé, d'une eau contenue dans une cuve de stockage. Pour un traitement de l'eau en circuit ouvert, on utilisera de préférence une installation du type de celle qui est décrite à la figure 3 ou à la figure 4.

La figure 2 représente schématiquement une variante selon laquelle le procédé est directement mis en oeuvre à l'intérieur d'un aquarium. Les mêmes signes désignent les mêmes éléments qu'à la figure 1. Dans ce cas, la cloison 1 est constituée par du sable ou du gravier, qui est pris en sandwich entre deux grilles 14 et 15. La grille 15, située à faible distance de la paroi inférieure de l'aquarium, supporte la couche de sédiment. La grille 14, dissimulée pour des raisons esthétiques sous une mince couche de sédiment, empêche les habitants de l'aquarium, et en particulier certains poissons, de creuser et de déblayer une partie du sédiment, ce qui aurait pour conséquence de perturber le fonctionnement du procédé en détruisant la stratification de la couche sédimentaire et en interrompant le confinement de l'eau occupant l'espace 6 situé sous la cloison. Dans cet exemple d'installation, c'est l'aquarium lui même qui sert de réacteur. L'eau qu'il contient est totalement purifiée, sans qu'il soit nécessaire d'utiliser d'autres accessoires que ceux qui sont nécessaires à la mise en oeuvre du procédé de l'invention.

Dans la variante représentée schématiquement à la figure 3, les mêmes signes désignent les mêmes éléments qu'à la figure 1. La différence consiste en ce que plusieurs cuves sont utilisées en cascade pour constituer une installation dans laquelle l'eau pénètre au niveau de la première cuve et ressort au niveau de la dernière cuve. L'eau à traiter pénètre dans l'installation par l'orifice 4 et ressort en 5. Lorsqu'une telle installation est utilisée en circuit ouvert, il est nécessaire d'ajuster le débit de l'installation de pompage, et par voie de conséquence le temps de résidence de l'eau, de façon à obtenir de l'eau pure à la sortie 5 du dernier réacteur. Lorsque l'installation est reliée, en circuit fermé, à un bassin contenant l'eau à purifier, le débit de l'installation de pompage peut varier dans de très fortes proportions sans affecter notablement son fonctionnement. Dans ce système, l'eau qui arrive dans la (ou les) dernière cuve ne contenant plus (ou très peu) de matières organiques, il n'est plus nécessaire de l'aérer et de la brasser. La (ou les) dernière cuve joue alors le rôle de bassin de décantation dans lequel sédimentent les particules minérales en suspension.

La figure 4 représente schématiquement une installation pour la mise en oeuvre du procédé de l'invention constituée par un réacteur (cuve), présentant plusieurs cloisons verticales. Les mêmes références désignent les mêmes éléments qu'à la figure 1. En plus des cloisons actives constituées par la substance qui sert de support aux composants biologiques utilisés par le procédé de l'invention, on a figuré de minces cloisons étanches 16 dont le rôle se limite à canaliser l'eau qui circule dans le réacteur. L'avantage principal de ce mode de mise en oeuvre du procédé réside dans le fait qu'on dispose d'une grande surface d'échange à l'intérieur d'un petit volume. Les contraintes de débit varient selon que l'installation est utilisée en circuit ouvert ou en circuit fermé et sont les mêmes que celles de l'installation décrite à la figure 3.

Les tableaux I, II et III mettent en évidence l'évolution des valeurs du pH et des concentrations des ions $NH_4^+$, $NO_2^-$, $NO_3^-$ et $Ca^{++}$ dans l'eau de trois aquariums en circuit fermé, dans lesquels aucun changement d'eau n'a été opéré, respectivement pendant 10 mois (tableau I et II) et 4 ans (tableau III).

TABLEAU I

| MOIS | 1 | 2 | 3 | 4 | 6 | 8 | 10 | 4(ans) |
|---|---|---|---|---|---|---|---|---|
| $NH_4^+$ (mg.$1^{-1}$) | 0,06 | 0,04 | 0,04 | 0,04 | – | – | 0,03 | – |
| $NO_2^-$ (mg.$1^{-1}$) | 0,08 | 0,08 | 0,08 | 0,08 | – | – | 0,08 | – |
| $NO_3^-$ (mg.$1^{-1}$) | 55,4 | 92,3 | 164 | 196 | – | – | 390 | – |
| pH (unités) | 8,3 | 8,2 | 7,8 | 8,1 | – | – | 7,3 | – |

TABLEAU II

| MOIS | 1 | 2 | 3 | 4 | 6 | 8 | 10 | 4(ans) |
|---|---|---|---|---|---|---|---|---|
| $NH_4^+$ (mg.$1^{-1}$) | 0,23 | 0,17 | 0,23 | 0,11 | – | – | 0,11 | – |
| $NO_2^-$ (mg.$1^{-1}$) | 0,05 | 0,05 | 0,05 | 0,05 | – | – | 0,05 | – |
| $NO_3^-$ (mg.$1^{-1}$) | 41,9 | 62,9 | 137,5 | 163,2 | – | – | 281 | – |
| pH (unités) | 8,3 | 8,1 | 7,8 | 7,9 | – | – | 6,5 | – |

TABLEAU III

| MOIS | 1 | 2 | 3 | 4 | 6 | 8 | 10 | 4(ans) |
|---|---|---|---|---|---|---|---|---|
| $NH_4^+$ $(mg.1^{-1})$ | 0,001 | 0,001 | 0,001 | 0,001 | 0,001 | 0,001 | 0,001 | 0,001 |
| $NO_2^-$ $(mg.1^{-1})$ | 0,002 | 0,001 | 0,002 | 0,004 | 0,008 | 0,002 | 0,001 | 0,001 |
| $NO_3^-$ $(mg.1^{-1})$ | 0,350 | 0,230 | 0,007 | 0,012 | 0,006 | 0,008 | 0,006 | 0,013 |
| $Ca^{++}$ $(mg.1^{-1})$ | 480 | 480 | 460 | 500 | 490 | 480 | 480 | 520 |
| pH (unités) | 8,22 | 8,26 | 8,30 | 8,25 | 8,20 | 8,22 | 8,25 | 8,24 |

Tableaux comparatifs des valeurs du pH et des concentrations en $NH_4^+$, $NO_2^-$, $NO_3^-$ et $Ca^{++}$ dans l'eau de deux aquariums marins en circuit fermé, dans lesquels aucun changement d'eau n'a été opéré, respectivement pendant 10 mois (tableaux I et II) et 4 ans (tableau III).

TABLEAU I :

Aquarium équipé d'un filtre sous sable coquillier actif, et ne contenant que des poissons (les valeurs du tableau ont été calculées d'après les courbes publiées dans TERVERS, 1979 page 48).

TABLEAU II :

Aquarium équipé d'une filtration verticale sur mousse de polyéther et drainage inverse sur mousse de polyéther, et ne contenant que des poissons (les valeurs du tableau ont été calculées d'après les courbes publiées dans TERVERS, 1979 page 52)

TABLEAU III :

Aquarium fonctionnant selon le procédé de l'invention, et contenant des poissons ainsi que de nombreux coraux vivants (Scléractiniaires), des oursins diadèmes et divers autres invertébrés (les mesures de pH ont été effectuées à environ 17.00 heures. En effet, le pH de l'eau de l'aquarium, ayant servi à l'expérience, présentait des variations cycliques de période 24 heures, avec en moyenne une valeur minimale de 7,80 unités pH à 08.00 heures et une valeur maximale de 8.25 unités pH à 17.00 heures).

Dans les aquariums I et II, équipés de filtres biologiques classiques, le pH qui est normal un mois après la mise en service des aquariums, chute graduellement pour, au bout de dix mois, atteindre respectivement les valeurs de 7,3 (aquarium I) et 6,5 (aquarium II). Les concentrations en nitrates ($NH_4^+$) augmentent rapidement. Au bout d'un mois, elles atteignent respectivement les valeurs de 54.4 $mg.1^{-1}$ (aquarium I) et de 41,9 $mg.1^{-1}$ (aquarium II). Au bout de dix mois, ces concentrations sont devenues très élevées : 390 $mg.1^{-1}$ (aquarium I) et 281 $mg.1^{-1}$ (aquarium II).

Dans les aquariums équipés selon l'invention :

– la concentration des ions calcium est élevée et stable (460 à 520 $mg.1^{-1}$),

11

– le pH reste normal et stable. Les concentrations des ions NH4$^+$ et NO$_2$– sont de 10 à 100 fois moins élevées que dans les aquariums I et II qui sont équipés de filtres classiques,

– la comparaison de la concentration des ions (NO$_3$–) nitrates fait apparaitre, de façon particulièrement évidente, le haut degré de purification de l'eau, obtenu grâce au procédé de l'invention. En effet, au bout du dixième mois de fonctionnement, la concentration en nitrate de l'eau de l'aquarium III est environ 50 000 fois plus faible que celle de l'eau des aquariums I et II.

REFERENCES

1. Cloison poreuse ou fibreuse
2. Espace d'eau à traiter
3. Diffuseur d'air ou d'oxygène
4. Orifice d'entrée
5. Orifice de sortie
6. Espace d'eau confinée
7. Interface (deux)
8. Lampe ou soleil
9. Niveau de l'eau
10. Zone sursaturée en oxygène
11. Zone riche en oxygène
12. Zone pauvre en oxygène
13. Zone intermédiaire
14. Grille
15. Grille
16. Cloison étanche

**Revendications**

1. Procédé de purification biologique des eaux douces ou marines contenant des matières organiques solides et dissoutes et des substances minérales dissoutes provenant de la dégradation desdites matières organiques, et notamment des eaux d'aquariums et de bassins d'aquaculture, utilisant l'action de micro-organismes aérobies et anaérobies ayant la propriété de dégrader les matières organiques et de neutraliser les polluants dissous, l'eau est traitée à l'intérieur d'un ou plusieurs moyens faisant office de réacteur, caractérisé par le fait qu'il utilise un ou plusieurs réacteurs (cuves) à l'intérieur desquels l'eau est traitée par DIFFUSION et action de micro-organismes aérobies et de micro-organismes anaérobies ; chaque réacteur comporte, à l'intérieur, un espace principal de réaction constitué par une substance poreuse ou fibreuse (1), servant de support aux différents micro-organismes utilisés, qui forme une cloison épaisse (1), interposée entre le volume d'eau à traiter (2) et un ou plusieurs volumes d'eau confinée (6), ledit espace principal de réaction présente des moyens pour maintenir des gradients de concentration des diverses substances dissoutes aptes à créer et maintenir ladite diffusion.

2. Procédé selon la revendication 1 caractérisé par le fait que

a- le principal espace de réaction est configuré de telle sorte qu'il présente deux interfaces (7), respectivement en contact avec l'eau à traiter (2), riche en oxygène, et avec un volume d'eau confinée (6), pauvre en oxygène,

b- le principal espace de réaction comporte, dans son épaisseur, plusieurs zones de réaction contigües (schématiquement trois zones 11, 12, 13) : une zone de réaction riche (11) en oxygène adjacente à l'interface en contact avec l'eau à traiter, une zone de réaction pauvre en oxygène (12) adjacente à l'interface en contact avec l'eau confinée et une zone intermédiaire (13),

c- la zone de réaction riche en oxygène (11) adjacente à l'interface en contact avec l'eau à traiter contient des micro-organismes aérobies ayant la propriété de dégrader les matières organiques et notamment des micro-organismes aérobies ayant la propriété de minéraliser complètement les composés azotés (transformation en nitrates),

d- la zone de réaction pauvre en oxygène (12) adjacente à l'interface en contact avec l'eau confinée contient des micro-organismes anaérobies ayant la propriété de neutraliser (transformer en produits inoffensifs) les polluants dissous, et notamment des micro-organismes anaérobies hétérotrophes, ayant la propriété de réduire complètement les nitrates (réduction des nitrates en nitrites, puis des nitrites en azote moléculaire) et les nitrites présents dans l'eau à traiter,

e- la zone intermédiaire (13) contient un mélange de micro-organismes aérobies et de micro-organismes anaérobies,

f- le volume d'eau (6) confinée est plongé dans l'obscurité.

3. Procédé selon l'une quelconque des revendications 1 ou 2 caractérisée par le fait

que la substance poreuse ou fibreuse (1) servant de support aux micro-organismes aérobies et aux micro-organismes anaérobies est de préférence un matériau carbonaté possédant un pouvoir tampon et ayant un effet correcteur sur le pH de l'eau.

4. Procédé selon l'une quelconque des revendications 1 ou 2 caractérisé par le fait

que la substance (1) est formée à partir de coraux broyés.

5. Procédé selon l'une quelconque des revendications 1 ou 2 caractérisé par le fait

que la substance poreuse ou fibreuse (1) contient des micro-algues fixées dans la mince couche superficielle (10) adjacente à l'interface en contact avec l'eau à traiter, et que cette interface est fortement éclairée.

6. Procédé selon l'une quelconque des revendications 1 ou 2 caractérisé par le fait

que l'on introduit de petits organismes fouisseurs détritivores dans l'épaisseur de la substance poreuse ou fibreuse (1).

7. Procédé selon l'une quelconque des revendications 1 ou 2 caractérisé par le fait

que pour un fonctionnement optimum du procédé de l'invention, il est impératif que, dans le volume d'eau confinée (6) et pauvre en oxygène, la concentration de ce gaz soit maintenue aux environs d'un milligramme par litre d'eau par un moyen de régulation.

8. Procédé selon la revendication 7 caractérisé par le fait

que le moyen de régulation de la concentration d'oxygène dissous qui doit être compris entre 0,5 et 1mg/l peut être un flux d'eau qui transite en petite quantité dans le ou lesdits volumes d'eau confinée (6), ledit flux pouvant provenir par un conduit de volume d'eau à traiter (2) et revenir par un autre conduit vers ce même volume d'eau à traiter (2).

9. Procédé selon la revendication 7 caractérisé par la fait

que la régulation est obtenue en règlant l'épaisseur et la densité de la couche de substance poreuse ou fibreuse comprise entre l'interface qui est en contact avec l'eau à traiter et l'interface qui est en contact avec le volume d'eau confinée.

10. Procédé selon l'une quelconque des revendications 1 ou 2 caractérisé par le fait

que le principal espace de réaction est utilisé pour créer des gradients de concentration qui structurent l'espace intérieur de chaque réacteur (gradients d'oxygène, d'azote, de gaz carbonique, d'ions ammonium, de nitrites, de nitrates, de calcium et autres substances dissoutes).

11. Procédé selon l'une quelconque des revendications 1 ou 2 caractérisé par le fait

qu'il utilise une partie des matières organiques présentes dans l'eau à traiter comme substrat carboné indispensable aux micro-organismes dénitrifiants hétérotrophes.

12. Procédé selon l'une quelconque des revendications 1 ou 2 caractérisé par le fait

que l'on utilise des moyens pour empêcher la lumière d'atteindre le volume d'eau confinée (6) et d'éclairer l'interface de la substance poreuse ou fibreuse (1) en contact avec ledit volume d'eau confinée (6) et pour empêcher tout dégagement d'oxygène par photosynthèse.

13. Dispositif pour la mise en oeuvre du procédé selon l'une quelconque des revendications 1 ou 2 caractérisé par le fait qu'il est composé :

– d'un ou plusieurs réacteurs (cuves) à l'intérieur desquels l'eau est traitée par DIFFUSION et action de micro-organismes aérobies et de micro-organismes anaérobies,

– chaque réacteur comporte, à l'intérieur, un espace principal de réaction constitué par une substance poreuse ou fibreuse (1), servant de support aux différents micro-organismes utilisés, qui forme une cloison épaisse (1), interposée entre le volume d'eau à traiter (2) et un ou plusieurs volumes d'eau confinée (6).

14. Dispositif selon la revendication 13 caractérisé par le fait

que la cloison (1) présente, dans son épaisseur, plusieurs zones de réaction : une zone sursaturée en oxygène (10), occupée par des micro-algues et des micro-organismes aérobies ; une zone riche en oxygène (11), occupée par des micro-organismes aérobies ; une zone pauvre en oxygène (12) occupée par des micro-organismes anaérobies ; une zone intermédiaire, (13) dans laquelle on trouve des micro-organismes aérobies et des micro-organismes anaérobies.

15. Dispositif selon l'une quelconque des revendications 13 ou 14 caractérisé par le fait

que l'intérieur de chaque réacteur comporte une ou plusieurs cloisons épaisses (1).

16. Dispositif selon l'une quelconque des revendications 13 ou 14 caractérisé par le fait

que l'intérieur de chaque réacteur comporte une ou plusieurs cloisons épaisses (1) attachées par leurs extrémités aux parois du réacteur.

17. Dispositif selon l'une quelconque des revendications 13 ou 14 caractérisé par le fait que la (ou les) cloison épaisse (1) est horizontale.

18. Dispositif selon l'une quelconque des revendications 13 ou 14 caractérisé par le fait que la (ou les) cloison épaisse (1) est verticale.

19. Dispositif selon l'une quelconque des revendications 13 ou 14 caractérisé par le fait que la (ou les) cloison épaisse (1) est inclinée.

20. Dispositif selon l'une quelconque des revendications 13 ou 14 caractérisé par le fait que l'intérieur de chaque réacteur comporte une ou plusieurs cloisons épaisses (1) qui ne sont pas attachées aux parois du réacteur et forment un ou plusieurs volumes creux contenant l'eau confinée (6).

21. Dispositif selon l'une quelconque des revendications 13 ou 14 caractérisé par le fait que la substance poreuse ou fibreuse formant la cloison (1) et servant de support aux différents microorganismes utilisés est, de préférence, un matériau carbonaté possédant un pouvoir tampon et ayant un effet correcteur sur le pH de l'eau.

22. Dispositif selon l'une quelconque des revendications 13 ou 14 caractérisé par le fait que la cloison (1) est constituée par du sable ou du gravier pris en sandwich entre deux grilles (14, 15).

23. Dispositif selon l'une quelconque des revendications 13 ou 14 caractérisé par le fait que le ou les volumes d'eau confinée (6) peut comporter un moyen de régulation de la concentration en oxygène dissout qui doit être compris entre 0,5 mg/l et 1 mg/l.

## Patentansprüche

1. Verfahren zur biologischen Reinigung von Süß- oder Meereswasser, das feste und gelöste organische Stoffe und gelöste mineralische Substanzen aus dem Abbau dieser organischen Stoffe enthält, und insbesondere von Wasser in Aquarien und Aquakulturbecken, bei dem die Wirkung von aeroben und anaeroben likroorganismen genutzt wird, die die Eigenschaft haben, die organischen Stoffe abzubauen und die gelösten Schmutzstoffe zu neutralisieren, wobei das Wasser im Inneren eines oder mehrerer Reaktoren aufbereitet wird, dadurch gekennzeichnet, daß

bei dem Verfahren ein oder mehrere Reaktoren (Wannen) verwendet werden, in denen das Wasser durch Diffusion und Wirkung von aeroben und anaeroben Mikroorganismen behandelt wird, und jeder Reaktor im Inneren einen Hauptreaktionsraum aufweist, der aus einer porösen oder faserigen, den verschiedenen verwendeten Mikroorganismen als Träger dienenden Substanz (1) besteht, die eine dicke Trennwand (1) bildet, die zwischen dem zu behandelnden Wasservolumen (2) und einem oder mehreren eingeschlossenen Wasservolumina (6) eingefügt ist, wobei dieser Hauptreaktionsraum mittel aufweist, um die Konzentrationsgefälle der verschiedenen zur Erzeugung und Aufrechterhaltung der Diffusion geeigneten gelösten Substanzen aufrechtzuerhalten.

2. Verfahren nach Anspruch 1, dadurch gekennzeichnet, daß

a) der Hauptreaktionsraum so ausgebildet ist, daß er zwei Grenzflächen (7) aufweist, die in Kontakt mit dem zu behandelnden, sauerstoffreichen Wasser (2) bzw. einem Volumen an eingeschlossenem, sauerstoffarmen Wasser (6) stehen,

b) der Hauptreaktionsraum in seiner Dicke mehrere aneinandergrenzende Reaktionszonen (schematisch drei Zonen 11, 12, 13) aufweist: eine sauerstofireiche Zone (11), die an die mit dem zu behandelnden Wasser in Kontakt stehende Grenzfläche angrenzt, eine sauerstoffarme Reaktionszone (12), die an die mit dem eingeschlossenen Wasser in Kontakt stehende Grenzfläche angrenzt, und eine Zwischenzone (13),

c) die sauerstoffreiche Reaktionszone (11), die an die mit dem zu behandelnden Wasser in Kontakt stehende Grenzfläche angrenzt, aerobe Mikroorganismen, die die Eigenschaft besitzen, organische Stoffe abzubauen, und insbesondere aerobe Mikroorganismen mit der Eigenschaft enthält, die Stickstoffverbindungen vollständig zu mineralisieren (Umwandlung in Nitrate),

d) die sauerstoffarme Reaktionszone (12), die an die mit dem eingeschlossenen Wasser in Kontakt stehende Grenzfläche angrenzt, anaerobe Mikroorganismen, die die Eigenschaft besitzen, die gelösten Schmutzstoffe zu neutralisieren (Umwandlung in unschädliche Stoffe), und insbesondere heterotrophe anaerobe Mikroorganismen enthält, die die Eigenschaft besitzen, die sich im zu behandelnden Wasser befindenden Nitrate und Nitrite vollständig zu reduzieren (Reduktion der Nitrate zu Nitriten, dann der Nitrite zu molekularem Stickstoff),

e) die Zwischenzone (13) ein Gemisch von aeroben und anaeroben Mikroorganismen enthält,

f) das eingeschlossene Wasservolumen (6) ins Dunkel getaucht wird.

3. Verfahren nach einem der Ansprüche 1 oder 2, dadurch gekennzeichnet, daß die den aeroben und anaeroben Mikroorganismen als Träger dienende poröse oder faserige Substanz (1) vorzugsweise aus einem mit Kohlendioxid gesättigten Material besteht, das eine Puffer- und den pH-Wert des Wassers korrigierende Wirkung hat.

4. Verfahren nach einem der Ansprüche 1 oder 2, dadurch gekennzeichnet, daß

die Substanz (1) aus zerkleinerten Korallen gebildet ist.

5. Verfahren nach einem der Ansprüche 1 oder 2, dadurch gekennzeichnet, daß

die poröse oder faserige Substanz (1) Mikroalgen enthält, die in der an die mit dem zu behandelnden Wasser in Kontakt stehende Grenzfläche angrenzenden dünnen Oberflächenschicht (10) befestigt sind, und daß diese Grenzfläche hell beleuchtet wird.

6. Verfahren nach einem der Ansprüche 1 oder 2, dadurch gekennzeichnet, daß

in die Dicke der porösen oder faserigen Substanz (1) kleine schmutzabbauende Organismen eingebracht werden.

7. Verfahren nach einem der Ansprüche 1 oder 2, dadurch gekennzeichnet, daß

es für ein optimales Funktionieren des erfindungsgemäßen Verfahrens unerläßlich ist, daß im eingeschlossenen und sauerstoffarmen Wasservolumen (6) die Konzentration dieses Gases durch ein Regulierungsmittel bei ungefähr einem Milligramm pro Liter Wasser gehalten wird.

8. Verfahren nach Anspruch 7, dadurch gekennzeichnet, daß

das Mittel zur Regulierung der Konzentration des gelösten Sauerstoffs, die zwischen 0,5 und 1 mg/l liegen muß, ein Wasserstrom sein kann, der in geringer Menge in dem oder den eingeschlossenen Wasservolumina (6) durchfließt, wobei dieser Strom durch eine Leitung des zu behandelnden Wasservolumens (2) kommen und durch eine andere Leitung zu demselben zu behandelnden Wasservolumen (2) zurückfließen kann.

9. Verfahren nach Anspruch 7, dadurch gekennzeichnet, daß

die Regulierung durch Einstellung der Dicke und Dichte der Schicht der porösen oder faserigen Substanz erfolgt, die zwischen der mit dem zu behandelnden Wasser in Kontakt stehenden Grenzfläche und der mit dem eingeschlossenen Wasservolumen in Kontakt stehenden Grenzfläche liegt.

10. Verfahren nach einem der Ansprüche 1 oder 2, dadurch gekennzeichnet, daß

der Hauptreaktionsraum dazu dient, Konzentrationsgefälle zu erzeugen, die den Innenraum jedes Reaktors strukturieren (Sauerstoff-, Stickstoff-, Kohlendioxid-, Ammoniumionen-, Nitrit-, Nitrat-, Kalziumgradienten sowie Gradienten weiterer gelöster Substanzen).

11. Verfahren nach einem der Ansprüche 1 oder 2, dadurch gekennzeichnet, daß

ein Teil der sich in dem zu behandelnden Wasser befindenden organischen Stoffe als kohlenstoffhaltiges Substrat verwendet wird, das für die heterotrophen, denitrifizierenden Mikroorganismen unerläßlich ist.

12. Verfahren nach einem der Ansprüche 1 oder 2, dadurch gekennzeichnet, daß

Mittel eingesetzt werden, um zu verhindern, daß das Licht das eingeschlossene Wasservolumen (6) erreicht und die mit dem eingeschlossenen Wasservolumen (6) in Kontakt stehende Grenzfläche beleuchtet, und um zu verhindern, daß Sauerstoff durch Photosynthese freigesetzt wird.

13. Vorrichtung zur Durchführung des Verfahrens nach einem der Ansprüche 1 oder 2, dadurch gekennzeichnet, daß

– sie aus einem oder mehreren Reaktoren (Wannen) besteht, in deren Inneren das Wasser durch Diffusion und Wirkung von aeroben und anaeroben Mikroorganismen behandelt wird,
– jeder Reaktor in seinem Inneren einen Hauptreaktionsraum aufweist, der aus einer porösen oder faserigen, den verschiedenen verwendeten Mikroorganismen als Träger dienenden Substanz besteht, die eine dicke Trennwand (1) bildet, die zwischen dem zu behandelnden Wasservolumen (2) und einem oder mehreren eingeschlossenen Wasservolumina (6) eingefügt ist.

14. Vorrichtung nach Anspruch 13, dadurch gekennzeichnet, daß

die Trennwand (1) in ihrer Dicke mehrere Reaktionszonen aufweist: eine mit Sauerstoff übersättigte und durch Mikroalgen und aerobe Mikroorganismen besetzte Zone (10); eine sauerstoffreiche und mit aeroben Mikroorganismen besetzte Zone (11); eine sauerstoffarme und mit anaeroben Mikroorganismen besetzte Zone (12); eine Zwischenzone (13), in der sich aerobe und anaerobe Mikroorganismen befinden.

15. Vorrichtung nach einem der Ansprüche 13 oder 14, dadurch gekennzeichnet, daß

sich im Inneren jedes Reaktors eine oder mehrere dicke Trennwände (1) befinden.

16. Vorrichtung nach einem der Ansprüche 13 oder 14, dadurch gekennzeichnet, daß

sich im Inneren jedes Reaktors eine oder mehrere dicke Trennwände (1) befinden, die mit ihren Enden an den Wänden des Reaktors befestigt sind.

17. Vorrichtung nach einem der Ansprüche 13 oder 14, dadurch gekennzeichnet, daß

die dicke Trennwand (oder die Trennwände) (1) horizontal ist.

18. Vorrichtung nach einem der Ansprüche 13 oder 14, dadurch gekennzeichnet, daß

die dicke Trennwand (oder die Trennwände) (1) vertikal ist.

19. Vorrichtung nach einem der Ansprüche 13 oder 14, dadurch gekennzeichnet, daß
die dicke Trennwand (oder die Trennwände) (1) geneigt ist.

20. Vorrichtung nach einem der Ansprüche 13 oder 14, dadurch gekennzeichnet, daß
jeder Reaktor im Inneren eine oder mehrere dicke Trennwände (1) aufweist, die nicht an den Wänden des Reaktors befestigt sind und einen oder mehrere, das eingeschlossene Wasser (6) enthaltende Hohlräume bilden.

21. Vorrichtung nach einem der Ansprüche 13 oder 14, dadurch gekennzeichnet, daß
die poröse oder faserige Substanz, die die Trennwand (1) bildet und den verschiedenen verwendeten Mikroorganismen als Träger dient, vorzugsweise aus einem mit Kohlendioxid gesättigten Material besteht, das eine Pufferund den pH-Wert des Wassers korrigierende Wirkung hat.

22. Vorrichtung nach einem der Ansprüche 13 oder 14, dadurch gekennzeichnet, daß
die Trennwand (1) aus Sand oder Kies besteht, der zwischen zwei Gittern (14, 15) geschichtet ist.

23. Vorrichtung nach einem der Ansprüche 13 oder 14, dadurch gekennzeichnet, daß
das oder die eingeschlossenen Wasservolumina (6) ein Mittel zur Regulierung der Konzentration des gelösten Sauerstoffs aufweisen können, die zwischen 0,5 mg/l und 1 mg/l liegen soll.


## Claims

1. A process for the biological purification of sweet or salt waters containing solid and dissolved organic materials and dissolved mineral materials resulting from decomposition of these organic materials, and in particular of water in aquariums and aquaculture basins, wherein the effect of aerobic and anaerobic microorganisms is made use of, which organisms have the property of decomposing the organic materials and of neutralizing the dissolved polluting materials, with the water being processed in the interior of one or several reactors, **characterized** in that
in the process one or several reactors (vessels) are used in the interior of which the water is treated through diffusion and the effect of aerobic and anaerobic microorganisms, and in that each reactor contains in its interior a main reaction chamber consisting of a porous and fibrous material (1) serving as a carrier for the various microorganisms used, which material forms a thick partition wall (1) interposed between the water volume (2) to be treated and one or several confined water volume(s) (6), this main reaction chamber comprising means for maintaining the concentration gradients of the various dissolved materials suited to produce and maintain the diffusion.

2. The process according to claim 1, characterized in that
a) the main reaction chamber is formed such that it comprises two interfaces (7) in contact, respectively, with the oxygen-rich water (2) to be treated and with a volume of confined water (6) lacking in oxygen;
b) the main reaction chamber comprises in its thickness several adjacent reaction zones (schematically three zones 11, 12, 13): an oxygen-rich zone 11 adjacent to the interface in contact with the water to be treated, a reaction zone (12) lacking in oxygen, adjacent to the interface in contact with the confined water, and an intermediate zone (13);
c) the oxygen-rich reaction zone (11) adjacent to the interface in contact with the water to be treated contains microorganisms which have the property of decomposing organic materials, and in particular aerobic microorganisms which have the property of completely mineralizing the nitrogen compounds (transformation into nitrates).
d) the reaction zone (12) lacking in oxygen, adjacent to the interface in contact with the confined water, contains anaerobic microorganisms which have the property of neutralizing the dissolved polluting materials (transformation into innocuos materials), and in particular heterotrophic anaerobic microorganisms which have the property of completely reducing the nitrates and nitrites in the water to be treated (reduction of the nitrates to nitrites, and subsequently of the nitrites to molecular nitrogen).
e) the intermediate zone (13) contains a mixture of aerobic and anaerobic microorganisms;
f) the confined water volume (6) is plunged into darkness.

3. The process according to one of claims 1 or 2, characterized in that
the porous or fibrous material (1) serving as carrier for the aerobic or anaerobic microorganisms preferably consists of a material saturated with carbon dioxide having the effect of correcting the pH value of the water, and of a buffer.

4. The process according to one of claims 1 or 2, characterized in that
the material (1) consists of crushed corals.

5. The process according to one of claims 1 or 2, characterized in that
the porous or fibrous material (1) contains microalgae fixed in the thin surface layer (10) adjacent to the interface in contact with the water to be treated, and in that this interface is brightly illuminated.

6. The process according to one of claims 1 or 2, characterized in that
   into the thickness of the porous or fibrous material (1) small pollutant matter decomposing organisms are introduced.

7. The process according to one of claims 1 or 2, characterized in that
   it is indispensible for an optimal functioning of the process according to the invention that in the confined water volume (6) lacking in oxygen the concentration of this gas is held at about one milligram per liter of water through a regulating agent.

8. The process according to claim 7, characterized in that
   the means for regulating the concentration of the dissolved oxygen, which must be between 0.5 and 1 mg/l, may be a stream of water flowing through the confined water volume(s) (6) in small amounts, this stream being allowed to arrive through a pipe of the water volume (2) to be treated and to return through another pipe to the same water volume (2) to be treated.

9. The process according to claim 7, characterized in that
   regulating is effected through adjusting the thickness and the density of the layer of the porous or fibrous material which is located between the interface in contact with the water to be treated and the interface in contact with the confined water volume.

10. The process according to one of claims 1 or 2, characterized in that
    the main reaction chamber serves the purpose of producing concentration gradients structuring the interior of each reactor (oxygen gradients, nitrogen gradients, carbon dioxide gradients, ammonium ion gradients, nitrite gradients, nitrate gradients, calcium gradients, and gradients of other dissolved materials).

11. The process according to one of claims 1 or 2, characterized in that
    part of the organic materials in the water to be treated is used as a carbon-containing substrate, which is indispensible for the heterotrophic, denitrifying microorganisms.

12. The process according to one of claims 1 or 2, characterized in that
    means are used to prevent the light from reaching the confined water volume (6) and from irradiating the interface in contact with the confined water volume (6), and to prevent the release of oxygen through photosynthesis.

13. An apparatus for carrying out the process according to one of claims 1 or 2, characterized in that
    – it consists of one or several reactors (vessels) in the interior of which the water is treated through diffusion and the effect of aerobic and anaerobic microorganisms,
    – each reactor, in its interior, has a main reaction chamber consisting of a porous or fibrous material serving as carrier for the various microorganisms used, which material forms a thick partition wall (1) disposed between the water volume (2) to be treated and one or several confined water volume(s) (6).

14. The apparatus according to claim 13, characterized in that
    in its thickness the partition wall (1) has several reaction zones: a zone (10) over-saturated with oxygen and occupied by microalgae and aerobic microorganisms; an oxygen-rich zone (11) occupied by aerobic microorganisms; a zone (12) lacking in oxygen and occupied by anaerobic microorganisms; an intermediate zone (13) containing aerobic and anaerobic microorganisms.

15. The apparatus according to one of claims 13 or 14, characterized in that
    one or several thick partition walls (1) are disposed in the interior of each reactor.

16. The apparatus according to one of claims 13 or 14, characterized in that
    in the interior of each reactor one or several thick partition walls (1) are disposed which, with their ends, are secured to the walls of the reactor

17. The apparatus according to one of claims 13 or 14, characterized by
    the thick partition wall(s) (1) being horizontal.

18. The apparatus according to one of claims 13 or 14, characterized by
    the thick partition wall(s) (1) being vertical.

19. The apparatus according to one of claims 13 or 14, characterized by
    the thick partition wall(s) (1) being inclined.

20. The apparatus according to one of claims 13 or 14, characterized in that
    in its interior each reactor comprises one or several thick partition walls (1) which are not secured to the reactor walls and form one or several cavities containing the confined water (6).

21. The apparatus according to one of claims 13 or 14, characterized in that
    the porous or fibrous material forming the partition wall (1) and serving as a carrier for the various microorganisms used preferably consists of a material saturated with carbon dioxide having the effect of correcting the pH value of the water, and of a buffer.

22. The apparatus according to one of claims 13 or 14, characterized in that

the partition wall consists of sand or gravel forming a layer between two grids (14, 15).

23. The apparatus according to one of claims 13 to 14, characterized in that
the confined water volume(s) (6) may comprise a means for regulating the concentration of the dissolved oxygen, which should range between 0.5 mg/l and 1 mg/l.

FIG.1

FIG.2

FIG.3

FIG.4